# EUROPÄISCHE PATENTSCHRIFT

(11) **EP 1 190 381 B1**
(45) Veröffentlichungstag und Bekanntmachung des Hinweises auf die Patenterteilung: **02.06.2004**
(21) Anmeldenummer: 00929234.3
(22) Anmeldetag: 24.03.2000
(51) Int. Cl.: G06K 19/077

(54) **ADAPTERKARTE UND KOMMUNIKATIONSVORRICHTUNG**
ADAPTER CARD AND COMMUNICATIONS DEVICE
CARTE DE PERIPHERIQUE ET DISPOSITIF DE COMMUNICATION

(30) Priorität: 14.05.1999 DE 19922063
(43) Veröffentlichungstag der Anmeldung: 27.03.2002
(73) Patentinhaber: ROBERT BOSCH GMBH, 70442 Stuttgart (DE)
(72) Erfinder: GROEGER, Klaus-Erwin, D-31199 Diekholzen (DE)
(86) Internationale Anmeldenummer: PCT/DE2000/000900
(87) Internationale Veröffentlichungsnummer: WO 2000/070554

(56) Entgegenhaltungen:
- EP-A- 0 495 216
- EP-A- 0 564 051
- EP-A- 0 712 087
- EP-A- 0 887 767
- DE-C- 19 523 275
- DE-U- 9 310 057
- DE-U- 20 014 076

## Beschreibung

### Stand der Technik

Die Erfindung geht von einer Adapterkarte zur Anpassung einer Chipkarte an einen vorgegebenen Standard sowie einer Kommunikationsvorrichtung zur Kommunikation mit auf Karten angeordneten, elektrisch kontaktierbaren Modulen nach der Gattung der unabhängigen Patentansprüche aus.

Auf kartenförtnigen Trägern angeordnete, elektrisch kontaktierbare Module sind in Form von sogenannten Chipkarten, beispielsweise als Telefon-, Eurocheque-, Krankenkassenkarten oder auch als sogenannte Key-Cards für Autoradios der Firma Blaupunkt-Werke GmbH, seit langem bekannt. Diese bestehen im wesentlichen aus mindestens einem in eine Kunststoffkarte vorgegebener Abmessungen eingebetteten Mikrochip, der als Speicher- und/oder Mikroprozessorchip ausgeführt sein kann. Bei Chipkarten gemäß der Norm ISO 7816-1 und folgende sind die Kontakte eines in die Karte eingebetteten Mikrochips mit an der Oberfläche der Karte angeordneten Kontaktflächen verbunden. Mittels in einem geeigneten Chipkartenleser vorgesehenen Gegenkontakten kann somit das in die Kunststoffkarte eingebettete Modul zum Auslesen seiner Informationen bzw. zum Informationsaustausch zwischen Modul und Chipkartenleser kontaktiert werden.

Es sind zwischenzeitlich weitere, von der Norm ISO 7816-1 und folgende abweichende Chipkarten, beispielsweise in Form der sogenannten Multi-Media-Card (MMC) der Firma Siemens bekannt geworden. Diese unterscheiden sich von denen gemäß ISO 7816-1 und folgende durch ihre von der in ISO 7816-2 festgelegten Kontaktanordnung abweichende Anordnung der Kontaktflächen.

Weiter sind aus dem Bereich der GSM-Mobilfunktelefonie Chipkarten in Form sogenannter SIM-(Subscriber Identify Modul)-Karten bekannt, die zum Betrieb eines GSM-Mobilfunktelefons erforderlich sind. Bei älteren Mobilfunktelefonen wiesen diese SIM-Karten das ID-1-Chipkartenformat gemäß ISO 7810 auf, bei neueren Geräten werden jedoch im Zuge der fortschreitenden Miniaturisierung kleinere SIM-Karten eingesetzt. Um ältere Mobiltelefongeräte auch mit den neuen kleinen SIM-Karten betreiben zu können, wurden Kartenadapter angeboten, mittels derer die kleinen SIM-Karten an das ID-1-Chipkartenformat angepasst werden konnten. Die Kartenadapter wiesen die äußeren Abmessungen von ID-1-Chipkarten und eine Aufnahme für die kleinen SIM-Karten dergestalt auf, dass bei in einen zugehörigen Chipkartenleser des Mobiltelefons eingelegter Chipkarte deren Kontaktflächen exakt zu den Gegenkontakten des Chipkartenlesers ausgerichtet sind. Die beschriebenen Kartenadapter offenbaren die Merkmale der Oberbegriffe der unabhängigen Patentansprüche 1 und 2.

EP-A-0 495 216 offenbart eine Ausweiskarte mit Mikroprozessor, die derart hergestellt wird, dass eine Karte mit gemäß einem ersten Standard kleinen äußeren Abmessungen in einer einem zweiten Standard genügenden Karte größerer äußerer Abmessungen enthalten ist. Die kleinere Karte ist auf drei Seiten freigeschnitten und an ihrer vierten Seitenkante mit der großen Chipkarte über eine Sollbruchstelle verbunden und somit aus dieser bedarfsweise heraustrennoder herausschwenkbar. Ein Wiedereinsetzen der kleinen in die umgebende große Karte ist nach Heraustrennen der kleinen Chipkarte nicht vorgesehen. Auf einem weiteren Datenträger:der großen Karte, beispielsweise einem Magnetstreifen, der außerhalb der Fläche der kleineren Chipkarte angeordnet ist, können sogenannte Schlilsselinformationen zu im Mikrochip der kleinen Chipkarte gespeicherten Daten gespeichert sein.

EP-A-0 712 087 offenbart einen Chipkartenleser mit einer Auswerteschaltung, die es ermöglicht, die Kontaktierungsart des auf der Chipkarte angeordneten Moduls, nämlich mittels Kontakten, induktiv oder kapazitiv, automatisch zu erkennen. Zur Identifikation der Kartenart auf der Karte angebrachte Identifikationsmittel sind nicht vorgesehen.

DE-C-195 23 275 offenbart ein Verfahren zur Beschleunigung der Kommunikation zwischen einer Chipkarte und einem Datenaustauschgerät, wobei aus der von dem Datenaustauschgerät gelieferten Taktfrequenz und einem in der Chipkarte gespeicherten Taktfrequenzteilungsfaktor eine Übertragungsdatenrate für die Datenübertragung auf der Dateneingangs- und Ausgangsleitung abgeleitet wird. Ferner sendet die Chipkarte als Identifizierung ihres Chipkartentyps und zur Mitteilung desselben an das Datenaustauschgerät ein Identifizierungssignal.

DE-U-200 14 076 offenbart eine Adapterkarte mit einer Ausnehmung zum Einsetzen einer Chipkarte, wobei die Adapterkarte zur Adaptierung einer SIM-Karte kleiner äußerer Abmessungen an ein größeres Kartenformat dient. Auf der Adapterkarte findet sich beispielsweise einen Aufdruck "Adapter zum Einlegen der SIM-Karte leicht nach hinten biegen" im Sinne einer Bedienungsanleitung, wobei diesem Aufdruck zu entnehmen ist, welche Art von Chipkarte, nämlich eine SIM-Karte, in den Adapter eingelegt werden soll.

Aus EP-A-887 767 ist eine Chipkarte mit Aufdruck bekannt.

Schließlich sind Chipkartenleser bekannt, die einen Kartenschacht zum Einführen einer auszuwertenden Chipkarte aufweisen, in dem den Kontaktflächen der Chipkarte zugeordnete Gegenkontakte angeordnet sind, über die die Informationen der Chipkarte auswertbar sind, bzw. ein Informationsaustausch mit dem in der Chipkarte enthaltenen Modul erfolgt.

Die Erfindung wird durch die Ansprüche definiert.

Es wird eine Adapterkarte zur Anpassung einer Chipkarte an einen vorgegebenen Standard mit einer Aufnahme zum Einsetzen einer Chipkarte vorgeschlagen, die sich durch Identifikationsmittel zur Identifikation der Art einer in die Adapterkarte eingesetzten Chipkarte auszeichnet.

Weiter wird eine Kommunikationsvorrichtung zur Kommunikation mit auf Karten angeordneten, elektrisch kontaktierbaren Modulen, mit einem Kartenschacht zum Einlegen einer Karte, auch unter der Bezeichnung Chipkartenleser bekannt, vorgeschlagen die sich durch eine Erkennungsschaltung zur Bestimmung der Art des auf einer in den Kartenschacht eingelegten Karte angeordneten Moduls auszeichnet.

Die erfindungsgemäße Adapterkarte mit den Merkmalen des ersten unabhängigen Patentanspruchs hat den Vorteil, dass eine in die Adapterkarte eingesetzte Chipkarte trotz Anpassung an einen vorgegebenen Standard identifizierbar bleibt. Dies ist beispielsweise dann von Bedeutung, wenn ein auf einer standardgemäßen Chipkarte angeordneter Chip mit einer anderen Versorgungsspannung betrieben wird, als ein auf einer mittels der Adapterkarte anzupassenden Chipkarte, da ein irrtümlicher Betrieb des Chips mit einer nicht passenden Betriebsspannung zu dessen Fehlfunktion oder gar Zerstörung führen könnte. Die erfindungsgemäße Adapterkarte ermöglicht somit die einwandfreie Erkennbarkeit des Mikrochips beispielsweise durch eine Kommunikationsvorrichtung, insbesondere einen erfindungsgemäßen Chipkartenleser, mit den Merkmalen des zweiten unabhängigen Patentanspruchs, in den die Chipkarte zur Auswertung eingebracht wird, so dass beispielsweise die Betriebsspannung auf die Anforderungen des auszuwertenden Mikrochips abgestimmt werden kann.

Ebenso ermöglicht die Erfindung auch beispielsweise eine Zuordnung der Belegung der Gegenkontakte des Chipkartenlesers in Abhängigkeit einer eingelegten und auszuwertenden Chipkarte.

Weiter ermöglicht die Erfindung die Anpassung weiterer Parameter des Chipkartenlesers bzw. seiner Auswerteeinheit, wie beispielsweise der Auswerteempfindlichkeit bzw. Auflösung für die Auswertung eines auszuwertenden Datums oder auch der Auswertegeschwindigkeit.

### Zeichnungen

Ausführungsbeispiele der Erfindung sind in den Figuren dargestellt und werden im folgenden näher erläutert.

### Es zeigen

Figur 1 das Kontaktfeld bzw. die Kontaktflächen einer Chipkarte gemäß ISO 7816-1 und folgende,
Figur 2 eine Multi-Media-Card,
Figur 3 ein Kontaktfeld einer Multi-Media-Card, das an den ISO 7816-2-Standard angepaßt ist,
Figur 4 eine perspektivische Ansicht der Multi-Media-Card mit angepaßtem Kontaktfeld,
Figur 5 eine erfindungsgemäße Adapterkarte, hier in der Ausführung zur Anpassung einer Multi-Media-Card an den ISO 7816-Standard,
Figur 6 eine erfindungsgemäße Adapterkarte in der Ausführung zur Anpassung einer Multi-Media-Card an den ISO 7816-Standard mit eingesetzter Multi-Media-Card,
Figur 7 die Kontaktanordnung einer Kommunikationsvorrichtug in Form einer Chipkartenlesers vor dem Hintergrund einer Kontaktanordnung und
Figur 8 einen Längsschnitt durch die Seitenansicht eines erfindungsgemäßen Chipkartenlesers mit darin eingelegter Chip- bzw. Adapterkarte.

### Beschreibung eines Ausführungsbeispiels

Chipkarten im Sinne der ISO-Norm 7816 gehören zur Gruppe der Identifikationskarten, wie sie in der Norm ISO 7810 "Identification Cards - Physical Characteristics" definiert sind. Diese Norm spezifiziert die physikalischen Eigenschaften von Identifikationskarten einschließlich der Materialeigenschaften wie Flexibilität, Temperaturbeständigkeit und Abmessungen für drei verschiedene Größen von Karten (ID-1, ID-2 und ID-3). Die Basis für die Chipkartennormen ISO 7816-1 und folgende bildet die ID-1-Karte, wie sie heute vielfach als Karte für den Zahlungsverkehr, z. B. als Kredit- oder Eurochequekarte verbreitet ist.

Eine solche Chipkarte beinhaltet im Kartenkörper eine integrierte Schaltung die über Elemente zur Datenübertragung, zum Speichern von Daten und zur Verarbeitung von Daten verfügt. Die Datenübertragung kann dabei entweder über die Kontakte an der Oberfläche der Karte erfolgen, oder aber kontaktlos durch elektromagnetische Felder. Bei herkömmlichen Chipkarten nach dem ISO 7816-Standard, wie auch bei MMC-Karten sind die Chips auf einem Trägermodul angeordnet, das an seiner Oberfläche bereits die zur Kontaktierung des Chips erforderlichen Kontaktflächen aufweist. Dieses wird gewöhnlich in eine entsprechende Aussparung des kartenförmigen Trägers eingeklebt, so daß die Oberfläche des Trägermoduls plan mit der Oberfläche des kartenförmigen Trägers abschließt und die Kontaktflächen an der Oberfläche der Karte liegen.

Die wesentlichen Eigenschaften und Funktionen von Chipkarten sind in den ISO-Standards der Reihe 7816 festgelegt.

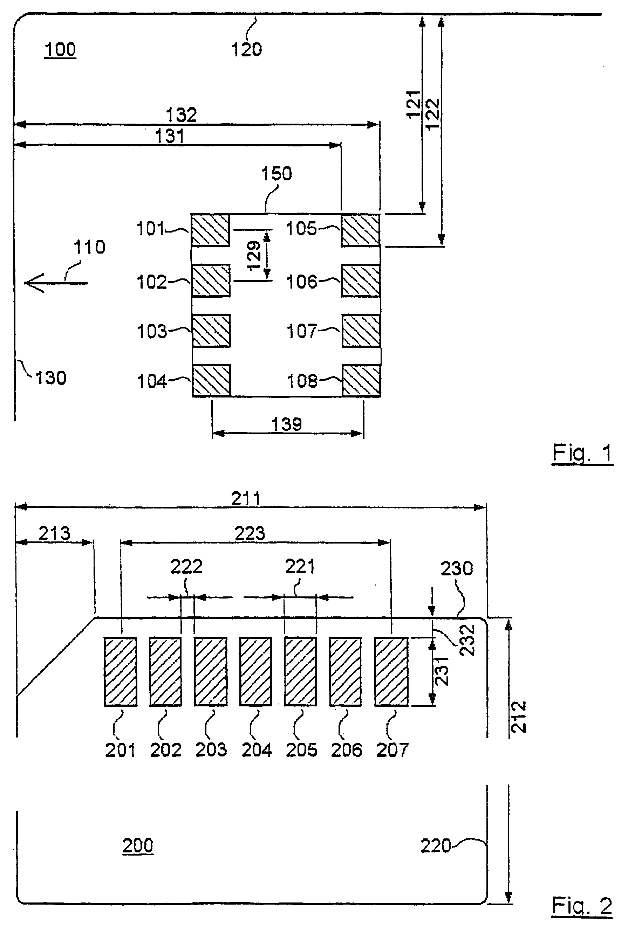

Figur 1 zeigt einen Ausschnitt aus einer Chipkarte 100 gemäß ISO 7816 in der Draufsicht.

Diese verfügt über eine, bezogen auf die Einschubrichtung 110, vordere Kante 130 und eine, in der ISO 7816 als obere Kante bezeichnete, rechte Kante 120, wobei die Lage der Kontaktflächen 101, 102, 103, 104, 105, 106, 107 und 108, die auf der Oberseite der Chipkarte von außen zugänglich angeordnet sind, in der ISO 7816-2 bezüglich der Kanten 120 und 130 angegeben wird.

Die ISO 7816-2 gibt für die Kontaktflächen 101 bis 108 Mindestabmessungen von 1,7 mm x 2,0 mm vor. Die in nachfolgender Tabelle angegebene Abstände 131 der Kontaktflächen 101 bis 108 von der Vorderkante sowie die Abstände 121 der Kontaktflächen von der Oberkante stellen Höchstmaße dar, die Abstände 132 von der Vorderkante und 122 von der Oberkante Mindestmaße.

| Kontaktfläche | Abstand 131 von Vorderkante [mm], max. | Abstand 132 von Vorderkante [mm], min. | Abstand 121 von rechter Kante [mm], max. | Abstand 122 von rechter Kante [mm], min. |
|---|---|---|---|---|
| 101 | 10,25 | 12,25 | 19,23 | 20,93 |
| 102 | 10,25 | 12,25 | 21,77 | 23,47 |
| 103 | 10,25 | 12,25 | 24,31 | 26,01 |
| 104 | 10,25 | 12,25 | 26,85 | 28,55 |
| 105 | 17,87 | 19,87 | 19,23 | 20,93 |
| 106 | 17,87 | 19,87 | 21,77 | 23,47 |
| 107 | 17,87 | 19,87 | 24,31 | 26,01 |
| 108 | 17,87 | 19,87 | 26,85 | 28,55 |

Höchstmaße für die Kontaktflächen sind durch ISO 7816-2 nicht vorgegeben, jedoch muß sichergestellt sein, daß die Kontaktflächen 101 bis 108 voneinander elektrisch isoliert sind.

Wie ohne weiteres ersichtlich, ist durch die Maximalabstände 131 der Kontaktflächen 101 bis 104 und der Mindestabstände 132 der Kontaktflächen 105 bis 108 von der Vorderkante der Chipkarte, sowie der Maximalabstände 121 der Kontaktflächen 101 und 105 und der Mindestabstände 122 der Kontaktflächen 104 und 108 von der Oberkante der Chipkarte 100 ein rechteckförmiger Bereich 150 von 9,62 mm x 9,32 mm definiert, den gemäß ISO 7816 die Kontaktflächen 101 bis 108 mindestens einnehmen müssen. Der Bereich 150 wird im Zusammenhang mit der vorliegenden Erfindung auch als vorgegebener Bereich bezeichnet. Die ISO 7816-2 läßt zu, daß die Kontaktflächen über den vorgegebenen Bereich nach außen hinausragen.

Zwei benachbarte, gemäß ISO 7816-2 vorgegebene Kontaktreihen 101 bis 104 und 105 bis 108 weisen in Einschubrichtung 110 einen Mittenabstand 139 von 7,62 mm, der Mittenabstand 129 zweier benachbarter Kontaktflächen 101 und 102 quer zur Einschubrichtung 110 beträgt 2,54 mm.

Die äußeren Abmessungen einer ID-1-Format-Chipkarte betragen ungefähr 85,5 mm für die Längsseite 130 und ungefähr 54,0 mm für die Vorderseite 120.

Eine von der Norm 7816 abweichende Chipkarte stellt die in Figur 2 dargestellte Multi-Media-Card 200, kurz MMC, der Firma Siemens bzw. Infineon dar.

Diese weist äußere Abmessungen von ungefähr 24 mm (211) x 32 mm (212) auf, wobei die in der dargestellten Draufsicht linke obere Ecke mit 4,0 mm x 45° (213) abgeschrägt ist. Das Kontaktfeld der MMC-Karte ist in Form einer Kontaktreihe mit Kontaktflächen 201, 202, 203, 204, 205, 206 und 207 ausgeführt die zur schmalen Vorderseite 230 der Chipkarte einen Abstand 231 von 1,0 mm aufweist. Die Kontaktflächen 201 bis 207 selbst haben Abmessungen von 1,7 mm (221) x 3,5 mm (231) und haben untereinander quer zur Breitseite 220 der MMC-Karte einen Abstand von 0,625 mm.

Um nun die Möglichkeit zu schaffen, eine MMC-Karte sowohl mit einem MMC-Kartenleser, als auch einem Chipkartenleser für Chipkarten nach dem ISO 7816-Standard auswerten zu können, wird in einer weiteren Patentanmeldung des Anmelders vorgeschlagen, innerhalb des vorgegebenen Bereichs 150 auf der MMC-Karte eine der ersten Kontaktreihe 201 bis 207 benachbarte zweite Kontaktreihe 105 bis 108 derart anzuordnen, daß sowohl die Kontaktflächen 201 bis 204 der MMC-Karte durch geringfügige Verbreiterungen an den ISO 7816-Standard angepaßt werden können, als auch die Kontaktflächen 105 bis 108 der zweiten Kontaktreihe den Anforderungen des ISO 7816-Standards genügen.

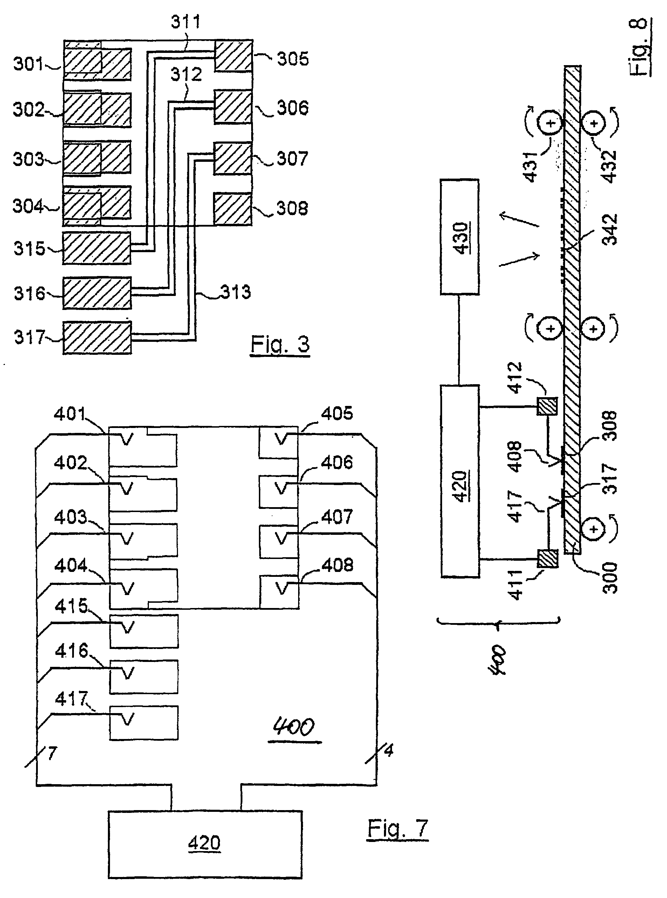

Eine entsprechende, beispielsweise auf einer MMC-Karte realisierte Kontaktanordnung zeigt Figur 3.

Die Kontaktanordnung der Figur 3 umfaßt ein erstes Kontaktfeld mit Kontakten 301 bis 304, die aus einer Überlagerung der Kontaktflächen 101 bis 104 gemäß ISO 7816-2 und 201 bis 204 der MMC-Karte hervorgehen, und die im Bereich des durch ISO 7816-2 vorgegebenen Bereichs 150 sowohl den Anforderungen der ISO 7816-2, als auch den Anforderungen an MMC-Karten-Kontaktflächen entsprechen. Weiterhin ist ein zweites Kontaktfeld mit Kontaktflächen 305 bis 308 vorgesehen, das ebenfalls den Anforderungen der ISO 7816-2 hinsichtlich der Lage seiner Kontaktflächen genügt. Die außerhalb des vorgegebenen Bereichs 150 liegenden Kontaktflächen 205, 206 und 207 der MMC-Karte sind unverändert übernommen (Kontaktflächen 315, 316, 317) und ermöglichen somit weiterhin die Auswertung der MMC-Karte mittels eines MMC-Kartenlesers. Zur gleichzeitigen Auswertbarkeit der solchermaßen modifizierten MMC-Karte mit einem ISO-Kartenleser sind die außerhalb des vorgegebenen Bereichs 150 liegenden Kontaktflächen 315 bis 317 über Leiterbahnen 311, 312, 313 mit den Kontaktflächen 305, 306 und 307 des zweiten Kontaktfeldes verbunden. Somit sind sämtliche Kontakte des MMC-Moduls über MMC- wie ISO 7816-kompatible Kontaktflächen kontaktierbar.

Das beschriebene Ausführungsbeispiel bezieht sich auf eine modifizierte Kontaktanordnung für MMC-Module, ebenso ist es aber auch denkbar, die beschriebene Kontaktanordnung beispielsweise auf einer Chipkarte nach ISO 7816 vorzusehen. Damit ist auch eine ISO-7816-Chipkarte sowohl für ISO-7816-Chipkartenleser, als auch MMC-Kartenleser auswertbar.

Weiterhin ermöglicht der Vorschlag der genannten Anmeldung durch geeignete Anordnung eines zweiten Kontaktfeldes innerhalb eines durch einen Standard, wie beispielsweise ISO 7816, vorgegebenen Bereichs eine Anpassung verschiedenartiger Kontaktanordnungen an den Standard. Eine Beschränkung ergibt sich dabei allenfalls durch unterschiedliche Kontaktanzahlen, also beispielsweise dann, wenn die anzupassende Kontaktanordnung mehr belegte Kontakte aufweist, als die standardgemäße Kontaktanordnung.

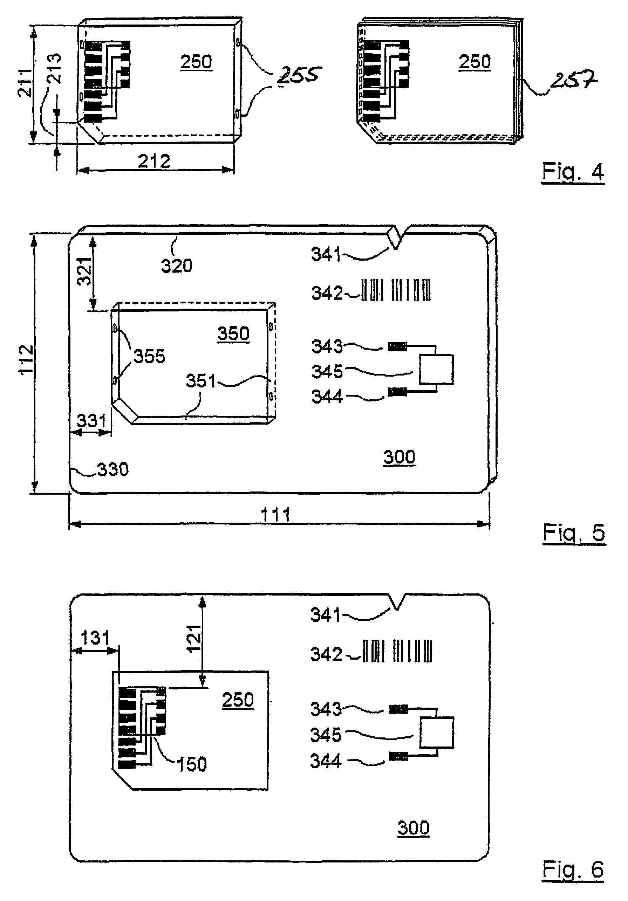

Ein MMC-Modul mit angepasster Kontaktanordnung gemäß der Lehre der erwähnten Patentanmeldung ist in Figur 4 dargestellt.

Figur 5 zeigt schließlich eine erfindungsgemäße Adapterkarte 300, im vorliegenden Fall zur Aufnahme eines hinsichtlich seines Kontaktfeldes modifizierten MMC-Moduls 250 nach Figur 4 und zu dessen Anpassung an den durch ISO 7816 vorgegebenen Standard.

Die äußeren Abmessungen der erfindungsgemäßen Adapterkarte 300, nämlich die Längen ihrer Längsseite 320 und Querseite 330 entsprechen mit ungefähr 85,5 mm (Maß 111) für die Längsseite und ungefähr 54,0 mm für die Querseite entsprechen denen einer herkömmlichen ID1-Fomat-Chipkarte gemäß ISO 7810 bzw. 7816. Für den Fall, dass mittels einer erfindungsgemäßen Adapterkarte 300 ein MMC-Modul 200, das eine größere Dicke als eine ISO-Chipkarte 100 aufweist, angepasst werden soll, weist diese vorteilhaferweise eine der anzupassenden Chipkarte mindestens entsprechende Dicke auf.

Die Adapterkarte 300 weist eine Aussparung in Form eines Durchbruchs 350 mit Seitenwänden 351 auf, die beim vorliegenden Ausführungsbeispiel zur Oberfläche der Adapterkarte 300 lotrecht stehen. Die Aussparung 350 bildet zusammen mit den Seitenwänden 351 eine Aufnahme, in die die anzupassende Chipkarte, im vorliegenden Fall eine MMC-Karte, einsetzbar ist und dient der passgenauen Aufnahme eines MMC-Moduls. Durch exakte Einhaltung der Maße 321 und 331, nämlich des Abstandes der Aussparung 350 von der Längsseite 320 und der Querseite 330 erfolgt eine präzise Ausrichtung des Kontaktfeldes 301 bis 308 und 315 bis 317 bezogen auf die Maßbezugskanten 120 bzw. 320 und 130 bzw. 330 einer normgerechten Chipkarte 100 bzw. der hinsichtlich ihrer Umrisse normgerechten Adapterkarte 300.

Damit ist eine präzise Anpassung des Kontaktfeldes der MMC-Karte an die durch ISO 7816 vorgegebene Lage der Kontaktflächen einer ISO 7816-Chipkarte gegeben. Wie aus Figur 6 zu ersehen, stimmt die Lage der Kontaktflächen bezogen auf die Ober- und Vorderkante 320 und 330 bei in das erfindungsgemäße Kartenadapter eingesetzter modifizierter MMC-Karte mit den ISO 7816-Maßen 121 und 131 überein.

Bei einer ersten Ausführungsform der Adapterkarte weist diese in den Seitenwänden 351 der Aussparung 350 Rastnasen 355 auf, die bei in die Adapterkarte 300 eingesetzter Chipkarte 250, beispielsweise der MMC-Karte 250 gemäß Figur 4, mit entsprechenden Vertiefungen 255 am Umfang der Chipkarte verrasten und damit eine sichere Arretierung bzw. Befestigung der Chipkarte im Kartenadapter gewährleisten. Ebenso kann jedoch auch im Sinne einer einfacheren Fertigung die Chipkarte 250 mit einer an ihrem Umfang umlaufenden Nut 257 versehen sein, die mit den Rastnasen 355 der Adapterkarte 300 verrastet.

Bei einer zweiten Ausführungsform der Adapterkarte 300 weist diese in den Seitenwänden 311 Vertiefungen bzw. einen umlaufende Nut auf, in die entsprechende, am Umfang der Chipkarte 250 angeformte Rastnasen 255 beim Einsetzen der Chipkarte einrasten.

Bei einer dritten Ausführungsform der Adapterkarte 300 sind die Abmessungen der Aussparung 310 der Adapterkarte derart bemessen, dass diese für eine einzusetzende Chipkarte ein Press- bzw. Klemmpassung darstellt, so dass die Chipkarte in der Adapterkarte, zumindest vorrangig, durch Klemmkräfte gehalten wird.

Bei allen drei Ausführungsformen der Adapterkarte 300 ist die Chipkarte aus der Adapterkarte 300 beispielsweise dadurch zu entnehmen, daß diese unter gleichzeitiger Ausübung von im wesentlichen lotrecht einwirkender Druckkraft geringfügig durchgebogen wird. Durch die Durchbiegung werden in den ersten beiden Fällen der Rastnasenlösung die Rastnasen durch die entsprechenden Vertiefungen bzw. Nut freigegeben, im Falle der Preßpassung die Klemmkräfte verringert, so daß eine Entnahme der Chipkarte aus der Adapterkarte 300 ermöglicht wird.

Bei allen drei Ausführungsformen der Adapterkarte 300 können gemäß einer alternativen Ausführungsform auch statt der lotrecht zur Kartenoberfläche angeordneten Seitenwände 351 der Aussparung 350 zur Rückseite der Karte hin konisch aufeinander zulaufende Seitenwände 351 vorgesehen sein. Eine solche Ausbildung der Seitenwände ermöglicht ein einfaches Einfügen einer anzupassenden Chipkarte 200, gleichzeitig ist jedoch ein Hindurchdrücken der Chipkarte durch die Adpaterkarte 300, beispielsweise durch die Andruckkraft der Gegenkontakte des Chipkartenlesers nicht möglich. Idealerweise sind die Seitenwände eines zu adaptierenden Moduls ebenfalls zu dessen Rückseite hin konisch aufeinander zulaufend ausgebildet, so daß sich auch hier eine Preßpassung realisieren läßt.

Die erfindungsgemäße Adapterkarte 300 weist schließlich Identifikationsmittel 341, 342, 345 zur Identifikation einer in die Adapterkarte 300 eingesetzten Chipkarte 200 auf. Diese haben den Zweck, einem Chipkartenleser bzw. der ihm zugeordneten Steuerung eine Identifizierung der in den Chipkartenleser eingelegte Chipkarte zu ermöglichen.

So weist beispielsweise eine ISO 7816-Chipkarte eine Kontaktbelegung wie folgt auf.

| Kontaktnummer | Funktion |
|---|---|
| 101 | Versorgungsspannung |
| 102 | Reset Signal |
| 103 | Clock Signal |
| 104 | Keine Belegung |
| 105 | Masse |
| 106 | Programmierspannung |
| 107 | Daten-Ein-/Ausgang |
| 108 | Keine Belegung |

Demgegenüber sind die Kontakte der MMC-Karte oder auch anderer andersformatiger Chipkarten möglicherweise zumindest teilweise abweichend belegt. Dies muß bei einer Auswertung der Chipkarte mittels eines passenden Chipkartenlesers berücksichtigt werden, was beispielsweise dadurch erfolgen kann, daß im Chipkartenleser abhängig von der eingelegten Chipkarte den Gegenkontakten des Chipkartenlesers durch eine Steuerung des Chipkartenlesers entsprechende Funktionen zugewiesen werden. Dazu ist es jedoch erforderlich, daß der Chipkartenleser die Art der eingelegten Chipkarte erkennt, was mit den beschriebenen Identifikationsmitteln ermöglicht wird.

Neben der beschriebenen Busumschaltung bzw. -zuordnung ist es weiterhin auch erforderlich, daß bei der Kontaktierung verschiedener Chiparten mittels ein- und desselben Chipkartenlesers jeder Chipart auch die passende Versorgungsspannung zur Verfügung gestellt wird. So werden beispielsweise ISO 7816-Chipkarten mit einer Versorgungsspannung von gegenwärtig üblicherweise 5 Volt, MMC-Module mit einer Versorgungsspannung von typisch 3 Volt betrieben. Eine zu starke Abweichung von dem jeweils vorgegebenen Wert durch eine einzige universelle Versorgungsspannung für verschiedene Modularten könnte deren Fehlfunktion oder gar Zerstörung zur Folge haben.

Weiter ist es auch vorstellbar, daß in Abhängigkeit der Art einer von dem Chipkartenleser auszuwertenden Chipkarte weitere Parameter, wie z. B. eine Erfassungsdatenrate, angepaßt werden müssen.

Bei einer ersten Ausführungsform sind die genannten Identifikationsmittel in Form einer an der Oberkante 320 der Adapterkarte 300 angeordneten Kerbe 341 realisiert, die beispielsweise mit einem mechanischen Erfassungsmittel, beispielsweise einem Federelement, das einen elektrischen Kontakt betätigt, erfaßt wird. So könnte beispielsweise durch die genannte Kerbe 341 eine Adapterkarte 300 für zum Beispiel MMC-Module von einer herkömmlichen ISO 7816-Chipkarte, die eine solche Kerbe nicht aufweist, unterschieden werden und die Auswerteelektronik durch den mittels des Federelements betätigten elektrischen Kontakts über die Art der eingelegten Chipkarte in Kenntnis gesetzt werden. Zwar ist in der Zeichnung nur eine einzige Kerbe 341 dargestellt, jedoch können bei einer Mehrzahl von voneinander unterschiedlichen zu adaptierenden Chipkartenarten auch mehrere Kerben vorgesehen sein, wobei eine Codierung der Chipkartenart durch die Lage der Kerben zueinander bzw. deren An- oder Abwesenheit als Codierung verwendet werden kann.

Bei einem zweiten Ausführungsbeispiel sind die Identifikationsmittel in Form eines Strich- oder Barcodes ausgeführt, der auf die Oberfläche der Adapterkarte 300 aufgedruckt ist. Dieser kann durch einen entsprechenden in einem zur Auswertung der Adapterkarten geeigneten Chipkartenleser realisierten Strichcodeleser ausgewertet werden. In Abhängigkeit des erkannten Strichcodes wird dann beispielsweise die Belegung der Gegenkontakte des Chipkartenlesers gesteuert.

Eine dritte Möglichkeit für ein Identifikationsmittel stellt ein zusätzlich in die Chipkarte oder die Adapterkarte 300 integriertes elektrisches Bauelement 345, beispielsweise ein elektrischer Widerstand, eine Spule, ein Kondensator oder auch ein Mikrochip dar, dessen Kontakte 343 und 344 an die Oberfläche der Chipkarte geführt sind und die durch entsprechende Gegenkontakte des Chipkartenlesers kontaktierbar sind. Als Codierung für die Art der auszulesenden Chipkarte dient dann der Wert des jeweiligen elektrischen Bauelements, beispielsweise dessen Widerstandswert, oder beispielsweise der Speicherinhalt des erwähnten Mikrochips.

Es ist ohne weiteres ersichtlich, daß diese Aufzählung nicht abschließend sein kann, sondern lediglich beispielhaft die verschiedenen Möglichkeiten zur Codierung bzw. Kenntlichmachung verschiedener an das ISO 7816-Format anzupassender Chipkarten bzw. Chipkartenarten verdeutlichen soll. Es ist weiterhin auch ersichtlich, daß neben den beschriebenen Möglichkeiten einer mechanischen, optischen oder kontaktgebundenen Erfassung der Identifikationsmittel 341, 342, 345 bzw. ihrer Parameter auch beispielsweise andere Erfassungsarten, wie eine magnetische, induktive oder kapazitive zur Erfassung der Parameter entsprechender Bauelemente wie Induktivität und Kapazität in Frage kommt.

Figur 7 zeigt Gegenkontakte 401 bis 408 und 415 bis 417 eines erfindungsgemäßen Chipkartenlesers vor dem Hintergrund einer Kontaktanordnung einer Chipkarte, im vorliegenden Fall einer MMC-Chipkarte, deren Kontaktfeld zur alternativen Auswertung mittels eines ISO-Chipkartenlesers oder eines MMC-Kartenlesers sowohl an den MMC-, als auch an den ISO-Standard angepaßt ist.

Jeder Kontaktflächen 301 bis 308 des ISO-Kontaktfeldes ist dabei ein eigener Gegenkontakt 401, 402, 403, 404, 405, 406, 407 und 408 des Chipkartenlesers zugeordnet. Darüber hinaus verfügt der Chipkartenleser 400 auch über weitere Kontakte 415, 416 und 417, die den Kontaktflächen 315, 316, 317 des MMC-Kontaktfeldes zugeordnet sind.

Die Gegenkontakte 401 bis 408 und 415 bis 417 sind jeweils für sich mit einer Auswerteeinheit 420 verbunden, in der die Buszuordnung und/oder Zuordnung anderer Parameter in Abhängigkeit einer erkannten Chipkarte oder Chipkartenart erfolgt.

Figur 8 zeigt einen Querschnitt einer erfindungsgemäßen Kommunikationsvorrichtung in Form eines Chipkartenlesers, der sowohl zur Auswertung von Chipkarten nach dem MMC-, wie auch von solchen nach dem ISO 7816-Standard angepaßt ist.

Der Chipkartenleser weist gemäß vorliegendem Ausführungsbeispiel angetriebene Transportrollen 431, 432 auf, die zum Transport einer in den nicht dargestellten Kartenschacht eingeführten Chip- oder Adapterkarte 300 in eine Auswerteposition innerhalb des Kartenlesers 400 vorgesehen sind. Zum Ausgleich unterschiedlicher Dicken verschiedener auszuwertender Chipkarten - beispielsweise sind MMC-Module etwas dicker als ID1-Format-Chipkarten - sind die Transportrollen 431 und 432 in vertikaler Richtung federnd gelagert und werden mittels Federkraft auf die Chip-/Adapterkarte 300 gepreßt.

Zur Kontaktierung der Kontaktflächen der eingelegten Chipkarte 300 weist der Kartenleser 400 Gegenkontakte auf. Im Querschnitt der Figur 8 sind die Kontaktflächen 317 und 408 der Chipkarte 300 sowie die ihnen zugeordneten Gegenkontakte 417 und 408 des Chipkartenlesers dargestellt. Die Gegenkontakte sind in Form einseitig in Lagerblöcken 411 und 412 gelagerter metallischer Blattfedern ausgeführt, die an ihrer Unterseite einen Nocken zur Kontaktierung der Kontaktflächen 317 und 408 aufweisen. Die Ausführung der Gegenkontakte als Blattfedern ermöglicht wiederum einen Ausgleich unterschiedlicher Dicken der auszuwertenden Chipkarten.

Die Gegenkontakte des Chipkartenlesers sind schließlich mit einer Auswerteeinheit 420 verbunden, in der die Zuordnung der Gegenkontakte 401 bis 417 zu bestimmten Funktionen erfolgt.

Der Chipkartenleser weist weithin eine Erkennungsschaltung 430 zur Identifizierung der Art einer in den Chipkartenleser eingelegten Chipkarte auf. Dieser ist beim in der Figur dargestellten Ausführungsbeispiel, bei dem die auszuwertenden Chipkarten zu ihrer Identifizierung an ihrer Oberfläche einen aufgedruckten Strichcode tragen, in Form eines Strichcodelesers 430 ausgeführt. Das Ausgangssignal des Strichcodelesers 430, das für die eingelegte Chipkarte bzw. deren Art kennzeichnend ist, ist der Auswerteeinheit 420 zugeführt, die in Abhängigkeit der erkannten Chipkarte bzw. Chipkartenart eine Zuordnung der Gegenkontakte 401 bis 417 im Sinne einer Busumschaltung bzw. - zuordnung zu bestimmten Funktionen herstellt.

Bei einer anderen Ausführungsform des Chipkartenlesers 400 ist die Erkennungsschaltung in Form eines mechanisch betätigbaren Schalters ausgeführt, der durch am Umfang der Chipkarte 300 angeordnete Aussparungen betätigt wird und damit ein die eingelegte Chipkarte kennzeichnendes Signal abgibt.

Bei einer weiteren Ausführungsform ist die Erkennungsschaltung 430 zur Erkennung eines in die Chip- bzw. Adapterkarte 300 eingebetteten elektrischen Bauelements 345 entweder durch dessen Kontaktierung mittels Kontakten 343 und 343, oder durch kapazitive oder induktive Erfassung eines Parameters des elektrischen Bauelements ausgeführt. Der Parameter ist dabei für die Art der Chipkarte kennzeichnend.

Im Falle einer MMC-Chipkarte bewirkt beispielsweise deren Erkennung mittels der Erkennungsschaltung 430 eine Umschaltung der Versorgungsspannung zur Kontaktierung der Chipkarte von 5 Volt auf 3 Volt mittels der Auswerteschaltung 420. Weiterhin wird auch der Bus an die Kontaktbelegung des MMC-Formats angepaßt.

Bei einer weiteren Ausführungsform der erfindungsgemäßen Kommunikationsvorrichtung bzw. eines erfindungsgemäßen Chipkartenlesers ist es vorgesehen, daß in Abhängigkeit einer bestimmten Modulart nur die zu dessen Kontaktierung erforderlichen Gegenkontakte aktiv geschaltet werden. So werden beispielsweise bei einer in den Kartenschacht eingebrachten ISO-Chipkarte nur die Gegenkontakte 401 bis 408 aktiv geschaltet, die Gegenkontakte 415 bis 417 bleiben ohne Funktion, da die zugehörigen Chipkartenkontakte 315 bis 317 ohnehin nicht vorhanden sind.

Gemäß ISO 7810 gibt es auch Chip- oder Speicherkarten im ID1-Format, die nicht mittels physischer Kontakte, sondern berührungslos, beispielsweise induktiv oder kapazitiv ausgewertet werden. Eine Weiterbildung der erfindungsgemäßen Kommunikationsvorrichtung sieht auch die Auswertung solcher Chipkarten dadurch vor, daß statt der Gegenkontakte entsprechende Auswertemittel, im Falle beispielsweise einer induktiven Auswertung entsprechende induktive Aufnehmer, vorgesehen sind.

## Patentansprüche

1. Adapterkarte (300) zur Anpassung einer Chipkarte (200) an einen vorgegebenen Standard, wobei die Adapterkarte (300) eine Aufnahme (310, 311) zum Einsetzen einer Chipkarte (200) aufweist,
**gekennzeichnet**
**durch** Identifikationsmittel (341, 342, 345) zur Kennzeichnung einer oder mehrerer der Eigenschaften
- Kontaktbelegung,
- Betriebsspannung,
- Datenrate zum Datenaustausch zwischen Chipkarte und einem mit der Chipkarte kommunizierenden Lesegerät
einer in die Adapterkarte (300) einzusetzenden Chipkarte (200).

2. Anordnung zur Anpassung einer Chipkarte (200) an einen vorgegebenen Standard bestehend aus der Chipkarte (200) und einer Adapterkarte (300), die eine Aufnahme (310, 311) zum Einsetzen der Chipkarte (200) aufweist,
**dadurch gekennzeichnet,**
**dass** auf der Chipkarte (200) Identifikationsmittel (341, 342, 345) zur Kennzeichnung einer oder mehrere der Eigenschaften
- Kontaktbelegung,
- Betriebsspannung
der in die Adapterkarte (300) eingesetzten Chipkarte (341, 342, 345) angeordnet sind.

3. Adapterkarte nach Anspruch 1 oder Anordnung nach Anspruch 2, **gekennzeichnet durch** elektrisch (354), magnetisch, mechanisch (341) und/oder optisch (342) auswertbare Identifikationsmittel.

4. Adapterkarte oder Anordnung nach einem der vorstehenden Ansprüche, **dadurch gekennzeichnet,**
**dass** die Aufnahme (310, 311 ) derart ausgebildet ist, dass sie eine einzusetzende Chipkarte (200) in der Art einer Klemmpassung aufnimmt.

5. Adapterkarte oder Anordnung nach einem der vorstehenden Ansprüche, **gekennzeichnet durch** Rastmittel (315) zur Verrastung einer in die Aufnahme (310, 311) eingesetzten Chipkarte (200).

6. Adapterkarte oder Anordnung nach Anspruch 5, **gekennzeichnet durch** eine Ausführung der Rastmittel in Form von Rastnasen (315).

## Claims

1. Adapter card (300) for matching a chip card (200) to a prescribed standard, the adapter card (300) having a receptacle (310, 311) for inserting a chip card (200),
**characterized**
**by** identification means (341, 342, 345) for distinguishing one or more of the properties
- contact assignment
- operating voltage
- data rate for data interchange between chip card and a reading unit which communicates with the chip card
of a chip card (200) which is to be inserted into the adapter card (300).

2. Arrangement for matching a chip card (200) to a prescribed standard, comprising a chip card (200) and an adapter card (300) which has a receptacle (310, 311) for inserting the chip card (200),
**characterized**
**in that** the chip card (200) holds identification means (341, 342, 345) for distinguishing one or more of the properties
- contact assignment,
- operating voltage
of the chip card (341, 342, 345) inserted into the adapter card (300).

3. Adapter card according to Claim 1 or arrangement according to Claim 2, **characterized by** electrically (354), magnetically, mechanically (341) and/or optically (342) evaluatable identification means.

4. Adapter card or arrangement according to one of the preceding claims, **characterized**
**in that** the receptacle (310, 311) is in a form such that it holds a chip card (200) which is to be inserted in the manner of a clamp fit.

5. Adapter card or arrangement according to one of the preceding claims,
**characterized by** latching means (315) for latching a chip card (200) which has been inserted into the receptacle (310, 311).

6. Adapter card or arrangement according to Claim 5, **characterized by** the latching means being produced in the form of detents (315).

## Revendications

1. Carte d'interface (300) pour adapter à un standard prédéterminé une carte à puce (200), la carte d'interface (300) présentant un logement (310, 311) pour insérer une carte à puce (200),
**caractérisée par**
des moyens d'identification (341, 342, 343) destinés à caractériser une ou plusieurs des propriétés suivantes
- occupation des contacts,
- tension de fonctionnement,
- débit de données pour l'échange des données entre la carte à puce et un lecteur qui communique avec la carte à puce d'une carte à puce (200) à insérer dans la carte d'interface (300).

2. Arrangement destiné à adapter à un standard prédéterminé une carte à puce (200) et composé de la carte à puce (200) et d'une carte d'interface (300) qui présente un logement (310, 311) pour insérer la carte à puce (200),
**caractérisé en ce que**
sur la carte à puce (200) sont disposés des moyens d'identification (341, 342, 343) destinés à caractériser une ou plusieurs propriétés
- occupation des contacts,
- tension de fonctionnement,
de la carte à puce (341, 342, 345) insérée dans la carte d'interface (300).

3. Carte d'interface selon la revendication 1 ou arrangement selon la revendication 2,
**caractérisé par**
des moyens d'identification qu'on peut exploiter de façon électrique (354), magnétique, mécanique (341) et/ou optique (342).

4. Carte d'interface ou arrangement selon l'une des revendications précédentes,
**caractérisé en ce que**
le logement (310, 311) est conçu de telle manière qu'il reçoit à la façon d'un ajustement par blocage une carte à puce (200) à insérer.

5. Carte d'interface ou arrangement selon l'une des revendications précédentes,
**caractérisé par**
des moyens d'encliquetage (315) destinés à encliqueter la carte à puce (200) insérée dans le logement (310, 311).

6. Carte d'interface ou arrangement selon la revendication 5,
**caractérisé par**
une réalisation des moyens d'encliquetage sous forme de tenons d'encliquetage (315).
